# EUROPÄISCHE PATENTSCHRIFT

(11) **EP 3 066 375 B1**
(45) Veröffentlichungstag und Bekanntmachung des Hinweises auf die Patenterteilung: **03.01.2018**
(21) Anmeldenummer: 14805783.9
(22) Anmeldetag: 29.10.2014
(51) Int. Cl.: F16L 19/02

(54) **VORRICHTUNG ZUM KOAXIALEN VERBINDEN ZWEIER ROHRLEITUNGEN UND ANORDNUNG ZUM LÖSEN**
DEVICE FOR COAXIALLY CONNECTING TWO PIPELINES, AND AN ARRANGEMENT FOR DISCONNECTING SAME
APPAREIL POUR ASSEMBLER COAXIALEMENT DEUX CONDUITES TUBULAIRES ET DISPOSITIF POUR LES DÉTACHER

(30) Priorität: 06.11.2013 DE 102013018644
(43) Veröffentlichungstag der Anmeldung: 14.09.2016
(73) Patentinhaber: Schwer Fittings GmbH, 78588 Denkingen (DE)
(72) Erfinder: HISS, Ludwig, 79346 Endingen (DE)
(74) Vertreter: Patentanwälte und Rechtsanwalt Weiß, Arat & Partner mbB
(86) Internationale Anmeldenummer: PCT/EP2014/002906
(87) Internationale Veröffentlichungsnummer: WO 2015/067355

(56) Entgegenhaltungen:
- EP-A1- 0 711 938
- WO-A2-2009/056290
- NL-A- 6 912 001
- US-A- 3 307 861
- US-A1- 2004 021 319

## Beschreibung

Die Erfindung betrifft eine Vorrichtung zum koaxialen Verbinden zweier Rohrleitungen sowie eine Anordnung zum Lösen einer solchen Verbindungsvorrichtung. Eine derartige Vorrichtung ist z.B. in Dokument US 2004/021319 offenbart. In Rohrleitungssystemen kann eine Aufgabe darin liegen, zwei koaxial ausgerichtete Rohrleitungen mit unterschiedlichen Durchmessern dicht miteinander zu verbinden. Dies ist jedoch nicht unproblematisch. Denn: Die Abmessungen im Rohrleitungsmarkt divergieren selbst in ähnlichen Durchmesserbereichen. Beispielsweise definiert Metric / DIN 11866 ein Rohr DN 15 mit dem Außendurchmesser von 19 mm und einer Wandstärke von 1,5 mm, woraus sich ein Innendurchmesser von 16 mm ergibt. Die Imperial Norm legt das ¾" Rohr mit einem Außendurchmesser von 19,05 mm und den Wandstärken 1,24 mm bzw. 1,65 mm fest. Daraus ergeben sich die Innendurchmesser 15,75 mm und 16,57 mm.

Diese vorstehenden Beispiele zeigen somit drei ähnliche Rohrleitungen mit ihren Innendurchmessern von 15,75 mm / 16,0 mm / 16,57 mm, die eine Transportkapazität für durchzuleitende Medien im Mengenverhältnis 0,97 / 1,00 / 1,07 besitzen und damit nicht signifikant voneinander abweichen. Am Weltmarkt für Rohrleitungen ist in absehbarer Zeit für dieses Problem kein Lösungsansatz zur Vereinheitlichung erkennbar. Insofern besteht weiterhin das Problem, die entsprechenden Rohrleitungsklassen auf technisch einfache Weise miteinander verbinden zu können.
Der Erfindung liegt die Aufgabe zu Grunde, eine modulare Vorrichtung zum koaxialen Verbinden zweier Rohrleitungen zu schaffen, die es ermöglicht, Rohrleitungen mit unterschiedlichen Innendurchmessern dicht miteinander zu verbinden.
Die technische Lösung ist gekennzeichnet durch die Vorrichtung mit den Merkmalen des Anspruchs 1.

Darüber hinaus ergibt sich die Aufgabe, eine Anordnung zum Lösen einer erfindungsgemäßen Vorrichtung zum Verbinden von Rohrleitungen zu schaffen, mit der die Verbindungsvorrichtung auch unter engen Platzverhältnissen einfach gelöst werden kann.
Diese Aufgabe wird durch eine Anordnung mit den Merkmalen des Anspruchs 11 gelöst.

Weiterbildungen sind jeweils in den Unteransprüchen ausgeführt.

Die erfindungsgemäße Vorrichtung zum koaxialen Verbinden zweier Rohrleitungen mit unterschiedlichen Innendurchmessern weist einen Schraubflansch für die eine Rohrleitung auf, der ein Außengewinde hat. Ferner weist die Vorrichtung einen Druckflansch für die andere Rohrleitung auf, der eine Druckfläche für eine Mutter hat. Darüber hinaus ist ein Dichtring vorgesehen, der zwischen den gegenüberliegenden Stirnseiten des Schraubflansches einerseits und des Druckflansches andererseits angeordnet ist. Ferner ist eine Mutter vorgesehen, die ein Innengewinde aufweist und die auf den Druckflansch aufgeschoben ist und auf den Schraubflansch aufdrehbar ist. Der Innendurchmesser des Dichtringes ist hierbei größer oder zumindest gleich groß wie der Innendurchmesser der Rohrleitungen, wobei der Unterschied der Innendurchmesser der Rohrleitungen jeweils über einen Konusbereich des Druckflansches und einen Konusbereich des Schraubflansches ausgeglichen wird. Der Dichtring weist um seinen gesamten äußeren Umfang herum parallel zu dessen oberer und unterer Flachseite radial nach außen weisende, gespreizte Schenkel in Form eines V-Profils auf.

Dadurch ist ein lösbares Verbindungssystem für Rohrleitungen mit einer modularen Systemverschraubung geschaffen. Der Kerngedanke der modularen Systemverschraubung besteht darin, dass von einem Flanschsystem mit konstanten Durchmessern ausgegangen wird. Diese konstanten Durchmesser betreffen den Innensowie den Außendurchmesser des Dichtringes, außerdem die Ausnehmungen in den Flanschen zur Aufnahme des vorgegebenen Dichtringes sowie schließlich die Außenumfangskontur der beiden Flansche einschließlich der Mutter. Variabel bei diesem Flanschsytem ist dann der Übergang zum Innendurchmesser der Rohrleitungen.

Da diese Rohrleitungen einen geringeren Innendurchmesser oder zumindest den gleichen Innendurchmesser wie der Innendurchmesser des Dichtringes besitzen, definiert jeweils ein Konusbereich des Druckflansches und einer des Schraubflansches eine Durchmesseranpassung zwischen dem Innendurchmesser des Dichtringes und dem Innendurchmesser der jeweiligen Rohrleitung. Dies bedeutet, dass die Rohrabmessungen hinsichtlich ihres Innendurchmessers über diesen Konusbereich, der innerhalb der physischen Abmessungen des Systembereichs liegt, individuell anpassbar, respektive aneinander anpassbar sind. Über die Variation des Konuswinkels wird dabei gewährleistet, dass der Konusbereich innerhalb des mechanisch stabilen Systembereichs endet. Im Ergebnis bedeutet dies, dass die erfindungsgemäße Vorrichtung zum koaxialen Verbinden zweier Rohrleitungen beispielsweise für Rohrleitungen mit einem Innendurchmesser von kleiner als 23 mm ein modulares Verschraubungssystem definiert, bei dem an die Systembereiche des Verbindungsflansches mit konstanten/fixen Durchmessern die variablen Innendurchmesser der verschiedenen Rohrleitungen adaptiert werden können, ohne dabei die Eigenschaften des speziell hierfür verwendeten Dichtringes zu mindern. Mit den vorstehend diskutierten variablen Innendurchmessern der verschiedenen Rohrleitungen verändern sich selbstverständlich korrespondierend auch die Außendurchmesser der Rohrleitungen. So gilt das zuvor Gesagte auch für sich verändernde Außendurchmesser entsprechend.

Vorteilhaft ragt der Dichtring nicht radial nach innen in den Strömungspfad ein, wodurch sich zusammen mit den jeweils sanften Übergängen der Konusbereiche eine Verbindungsvorrichtung mit geringen hydraulischen Verlusten ergibt.

Der eingesetzte spezielle Dichtring hat den Vorteil, dass er auf überaus einfache technische Weise eine außerordentlich gute Dichtwirkung zwischen den miteinander zu verbindenden Rohrenden im Bereich des Flansches erzielt. Dies wird dadurch erreicht, dass die V-förmig abgespreizten Schenkel der O-ringförmigen Dichtung gestaucht werden. Aus dieser Stauchwirkung resultiert die Dichtkraft an den Dichtstellen. Aufgrund des kreisförmigen oder kreisähnlichen Querschnitts der Schenkel am vorderen Dichtende sind diese um den Umfang des Flansches herum ringförmig sich erstreckenden Dichtstellen auf eine kleine Fläche konzentriert und erzeugen daher einen sehr großen Druck. Der durch die Stauchkraft hervorgerufene Materialfluss wirkt dabei vornehmlich in Richtung der Dichtflächen. Mit der erfindungsgemäßen Vorrichtung lassen sich daher auch extrem geringe Leckageraten von Helium und Wasserstoff erzielen.

Gemäß der Erfindung hat der Anschlag des Druckflansches für die Mutter einen stumpfen Winkel. Alternativ oder zusätzlich ist der Anschlag ballig ausgeführt. Dadurch wird auf optimale Weise die von der sich drehenden Mutter ausgeübte Axialkraft auf das Dichtungssystem übertragen. Mit dieser Ausführung kann die Mutter die Axialkraft beim Verschrauben optimal auf das Dichtungssystem übertragen, ohne dabei die beiden Reibflächen zur schädigen. Die schädigungsreduzierende Wirkung resultiert aus der kontinuierlichen Wanderung der Berührungslinie auf der balligen Flanschfläche, zwischen der Flanschfläche selbst und der Zugfläche der Mutter. Die Bewegung der Berührungslinie entsteht aus der sich während der Verschraubung kontinuierlich steigernden Kraftentwicklung der Mutter, unter der die Zugfläche der Mutter entgegen ihrer Bewegungsrichtung gebogen wird.

Nach einer bevorzugten Ausführungsform werden entweder der Druckflansch oder der Schraubflansch oder auch beide einen Rohrstutzenabschnitt aufweisen, der bzw. die dazu ausgebildet ist/sind, mit der bzw. den Rohrleitung(en) verbunden zu werden. Der oder die Rohrstutzenabschnitt(e) können dabei etwa den gleichen Querschnitt wie die mit ihnen zu verbindenden Rohre haben. Der ausgleichende Konusbereich kann sich zwischen der zur Aufnahme des Dichtrings ausgebildeten Ausnehmung und einem zu dem Rohrstutzenabschnitt weisenden Ende des Druckflansches und/oder des Schraubflansches erstrecken.

Der oder die Rohrstutzenabschnitte sind jeweils Teil der Flansche und dazu vorgesehen, über Löten, Schweißen ("Anschweißstutzen") oder andere Verbindungstechniken mit den eigentlich zu verbindenden Rohren verbunden zu werden. Die Länge des/der Rohrstutzen kann so bemessen werden, dass hinreichend Bewegungsfreiheit zum Verbinden mit den Rohren vorhanden ist. Die Rohrstutzenabschnitte können beispielsweise einstückig mit dem Druckflansch und/oder dem Schraubflansch ausgebildet sein oder aber mit stoffschlüssigen Verbindungstechniken daran gefügt sein.

Eine weitere Ausführungsform betrifft den Fall der Innendurchmessergleichheit einerseits des Dichtrings und andererseits des Schraubflansches oder Druckflansches. In diesem Fall ist die Ecke des Rohrinnendurchmessers unter 90° zum Dichtungseinstich ausgebildet und erhält eine Kantenverrundung mit einem Radius von beispielsweise 0,1 mm. Hierdurch kann eine undefinierte Scharfkantigkeit und/oder eventuelle Gratausbildung im Herstellprozess vermieden werden.

Darüber hinaus kann vorgesehen sein, dass der Dichtring und die Flansche aus dem gleichen oder einem zumindest sehr ähnlichen Material bestehen. Alternativ oder zusätzlich können die dichtenden Enden der Schenkel des V-Profils des Dichtrings sowohl vor als auch nach dem Zusammenpressen der beiden Flansche einen kreisförmigen oder kreisähnlichen Querschnitt haben. In der Dichtstellung des Dichtungssystems nach dem Zusammenpressen können die dichtenden Enden der Schenkel des Dichtringes dabei sowohl über durch eine erste Kreislinie definierte Berührungspunkte an einer ersten Dichtfläche als auch über durch eine zweite Kreislinie definierte Berührungspunkte an einer zweiten Dichtfläche dichtend anliegen. Die beiden Kreislinien sind dabei getrennt voneinander, d. h., sie fallen nicht zusammen. Die Ausnehmungen der jeweiligen Flansche definieren hierbei die Dichtflächen. Die erste Dichtfläche wird durch den senkrecht zur Rohrachse ausgerichteten Boden der Ausnehmung definiert und die zweite Dichtfläche durch die senkrecht zur Flanschebene ausgerichtete Innenwand der Ausnehmung definiert.

Eine weitere Weiterbildung des Dichtringes schlägt vor, dass der Winkel des V-Profils entweder in einem Bereich von 70° bis 100° oder bevorzugt in einem Bereich von 40° bis 70° liegt, etwa 50° beträgt.

Darüber hinaus kann vorgesehen sein, dass der Dichtring zwischen den beiden Schenkeln zusätzlich einen mittig angeordneten Ring aufweist. Dieser verbessert den Dichtring durch Ausbildung weiterer druckstabilisierender Brückenbögen zu den Schenkeln weiter in statischer Hinsicht. Der mittige Ring unterstützt dabei die gleichmäßige Verteilung der Kräfte in den Kontaktbereichen der Schenkel mit den Flanschausnehmungen und verbessert somit die Dichtwirkung des Systems. Alternativ oder zusätzlich können der Dichtring und die Flansche aus normalem Stahl oder Edelstahl bestehen, wobei jedenfalls Materialgleichheit zu einer guten Korrosionsbeständigkeit beiträgt und Edelstahl eine gute Diffusionsdichtheit hat.

Eine bevorzugte Weiterbildung schlägt vor, dass zwischen dem Schraubflansch und dem Druckflansch eine Verdrehsperre vorgesehen ist. Diese verhindert, dass sich die beiden Flanschelemente beim Drehen der Mutter relativ zueinander verdrehen. Vorzugsweise ist die Verdrehsicherung durch gleichmäßig um den Umfang sich erstreckende sowie korrespondierend ineinandergreifende Klauen gebildet. Dies stellt eine optimale Verdrehsicherung dar, welche sich um den gesamten Umfang des Flanschsystems herum erstreckt und somit eine Vielzahl von Anlageflächen zwischen den entsprechenden Klauen definiert. Dabei können die Klauen des Schraubflansches und die Klauen des Druckflansches in der Verdrehsicherung flächig aneinanderliegen. Dadurch wird durch diese spezielle Umfangskontur der beiden Flanschelemente ein optimaler Formschluß gebildet, indem in der Richtung, in der die Mutter angezogen wird, die seitlichen Flanken dieser Klauen flächig aneinanderliegen, wodurch eine selbstzentrierende Wirkung auf das Verschraubungssystem erreicht wird. Die Anordnung der ineinander greifenden Klauen ist exakt parallel und senkrecht zum Radius der Verschraubungsachse.

In Bezug auf den Anschlag des Druckflansches für die Mutter mit einem stumpfen Winkel oder gemäß der balligen Ausführung ist zu sagen, dass nach einer weiteren Ausführungsform der stumpfe Winkel beispielsweise 90° bis 95° betragen kann.

Dadurch wird auf optimale Weise die von der sich drehenden Mutter ausgeübte Axialkraft auf das Dichtungssystem übertragen. Die Balligkeit entsteht durch einen Radius von bspw. 200 mm mit dem Mittelpunkt auf der Flanschseite des Dichtungseinstichs. Er beginnt tangential in der Ecke - Flanschende / Rohransatz im 0° - Quadrant und geht am Flanschaußendurchmesser tangential in die kantenverrundete Ecke über. Die Kantenverrundung dieser Ecke wird typischerweise mit einem Radius von 0,3 mm ausgeführt.

Darüber hinaus kann in einer noch weiteren Ausführungsform vorgesehen sein, dass der bzw. die Durchmesser der Ausnehmungen des Druckflansches und/oder des Schraubflansches bezüglich eines Außendurchmessers des Dichtrings so gewählt ist/sind, dass sich eine Presspassung zwischen Dichtring und Ausnehmung ergibt. Die Pressung beträgt hierbei etwa 0,005 bis 0,01 mm.

Der leichte Presssitz erlaubt das leichte Einsetzen des Dichtrings bei der Montage in den gewünschten Flansch und verhindert gleichzeitig das herausfallen des Dichtrings während der Verschraubung.

Ferner kann der Druckflansch in einer noch weiteren Ausführungsform in einem vorbestimmten Abstand von der Druckfläche einen umlaufenden Einstich oder Bund haben. Der Einstich oder Bund hat hierbei eine radiale Ausdehnung (Tiefe) in einem Bereich von 0,2 mm bis 4,0 mm, insbesondere in einem Bereich von 0,5 mm bis 1,5 mm. Ferner kann eine zu der Mutter weisende Flanke des Einstichs oder des Bundes in einem Abstand von 1,0 bis 3,0 mm, insbesondere 1,5 mm bis 2,5 mm, von der Druckfläche des Druckflansches entfernt vorliegen.

Der Einstich erleichtert die Demontage der geschlossenen Verschraubung. Dazu wird in den Einstich ein Entformungswerkzeug, insbesondere eine Entformungsgabel, eingesetzt. Sie ist aus einem Flachmaterial mit der Dicke kleiner der Einstichbreite geformt. Der Gabelzwischenraum bildet den Einstichinnendurchmesser halbkreisförmig ab und ist durch die beiden Gabelschenkel um ca. die Länge des Einstichradius senkrecht zur Halbkreisachse verlängert. Die Höhe der Gabelschenkel mit Halbkreisverbindung ist so ausgelegt, dass sie beim Herausdrehen der Mutter eine Reibfläche bilden, die dafür für die Entformung der Verschraubungsteile Schraubflansch - Dichtung - Druckflansch sorgt. Die Entformungskraft zwischen Schraubflansch und Druckflansch entsteht durch das Aufschrauben der Mutter, wodurch eine Axialbewegung erzeugt wird, die über die Entformungsgabel auf den Druckflansch übertragen wird (Prinzip "Abzieher"). Hierdurch lässt sich die erfindungsgemäße Rohrverbindung selbst unter engsten Platzverhältnissen komfortabel lösen.

In einer bevorzugten Ausführungsform kann die erfindungsgemäße Vorrichtung zum Verbinden von Rohrleitungen als Verschraubungssystem mit mehreren Dichtringen mit unterschiedlichen Innendurchmessern sowie daran angepasste Schraubflanschen sowie Druckflanschen vorgesehen sein. Dadurch ist eine modulare Systemverschraubung für Rohrleitungen geschaffen, welche sich universell einsetzen lässt. Der Kerngedanke besteht dabei darin, dass beispielsweise vier Systeme vorgegeben sind, wobei jedes der vier Systeme sich durch einen ganz speziellen Dichtring mit vorgegebenem Innendurchmesser und vorgegebenem Außendurchmesser auszeichnet. Durch dieses modulare Verschraubungssystem ist es möglich, mit wenigen Basissystemen einen weiten Bereich von Rohrleitungen mit unterschiedlichen Innendurchmessern miteinander verbinden zu können.

Die erfindungsgemäße Anordnung zum Lösen einer Vorrichtung zum koaxialen Verbinden zweier Rohrleitungen mit unterschiedlichen Innendurchmessern weist schließlich die Vorrichtung selbst und ein Entformungswerkzeug auf. Der Druckflansch der Vorrichtung hat dabei in einem vorbestimmten Abstand von der Druckfläche einen umlaufenden Einstich oder Bund, der eine radiale Ausdehnung in einem Bereich von 0,2 mm bis 4,0 mm hat. Das Entformungswerkzeug weist einen flachen Eingriffsabschnitt auf, dessen Dicke kleiner ist als die Breite des Einstichs oder einen Abstand der zu der Mutter weisenden Flanke des Bundes und der Druckfläche des Druckflanschs.

Um die Rohrverbindung zu lösen, wird zunächst der Eingriffsabschnitt des Entformungswerkzeugs mit dem Einstich oder Bund des Druckflansches in Eingriff gebracht und das Entformungswerkzeug festgehalten. Anschließend wird die Mutter geöffnet, wodurch eine Axialbewegung in einer zum Einstich oder Bund weisenden Richtung bewirkt wird, bis die Mutter am Eingriffsabschnitt des Entformungswerkzeugs anliegt. Bei einem weiteren Öffnen der Mutter wird nun die Axialkraft über das Entformungswerkzeug auf den Druckflansch übertragen, so dass dieser mitgenommen wird.

Es kann hierbei ein gewisses Spiel des Entformungswerkzeugs bezüglich des Einstichs oder des Bundes vorgesehen sein, so dass dieses leichter über den Druckflansch geschoben werden kann und sich auch beim Herausziehen nicht verkantet.

Ferner kann der Eingriffsabschnitt des Entformungswerkzeugs eine U-förmige Öffnung aufweisen, die passend auf den zwischen der Mutter und dem Bund liegenden Abschnitt des Druckflansches oder auf den Einstich steckbar ist, wodurch eine vergleichsweise gleichmäßige Verteilung der einwirkenden Kräfte erreicht werden kann.
Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich schematische Darstellungen von Ausführungsbeispielen der Erfindung.

Es zeigen:
- Fig. 1: eine Ansicht einer geschlossenen Systemverschraubung;
- Fig. 2: einen Längsschnitt durch die Systemverschraubung in Fig. 1 entlang der Linie B-B in Fig. 1;
- Fig. 3: einen Schnitt durch die Systemverschraubung in Fig. 1 entlang der Linie A-A in Fig. 1;
- Fig. 4: einen Detailausschnitt aus Fig. 2 (Einzelheit C);
- Fig. 5: eine Explosionsdarstellung der Systemverschraubung;
- Fig. 6: einen Längsschnitt durch die Systemverschraubung in Fig. 1 entlang der Linie B-B in Fig. 1 mit verbundenen Rohrleitungen;
- Fig. 7: eine Schnittansicht des Dichtrings;
- Fig. 8: Detail B des Dichtrings aus Fig. 7;
- Fig. 9: eine Draufsicht der Anordnung zum Lösen der Vorrichtung zum Verbinden zweier Rohrleitungen;
- Fig. 10: einen Längsschnitt durch die Anordnung zum Lösen der Vorrichtung zum Verbinden zweier Rohrleitungen.

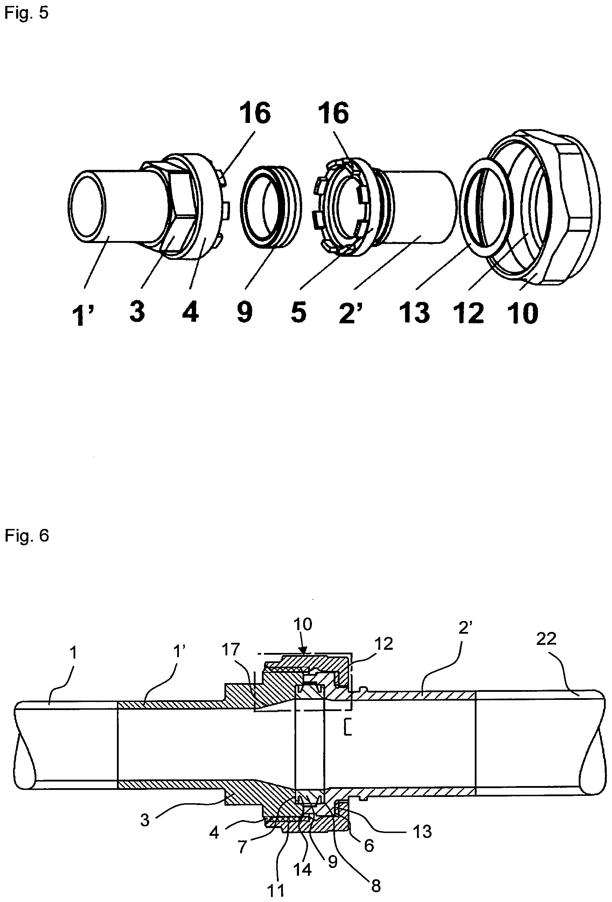

Die Figuren zeigen eine modulare Systemverschraubung für zwei Rohrleitungen mit unterschiedlichen Innendurchmessern. Besonders **Fig. 6** macht deutlich, dass die eine Rohrleitung 1 mit dem Rohrstutzenabschnitt 1' und die andere Rohrleitung 2 mit dem Rohrstutzenabschnitt 2' verbunden wird, beispielsweise durch Anschweißen oder Anlöten. Der eine Rohrstutzenabschnitt 1' ist mit einem Schraubflansch 3 mit Außengewinde 4 und der andere Rohrstutzenabschnitt 2' mit einem Druckflansch 5 verbunden, der eine in einem stumpfen Winkel schräg angestellten Druckfläche 6 hat. Zwischen den einander zugewandten Stirnseiten einerseits des Schraubflansches 3 und andererseits des Druckflansches 5 ist jeweils eine zylinderförmige Ausnehmung 7, 8 ausgebildet. Diese beiden Ausnehmungen 7, 8 nehmen einen Dichtring 9 auf.

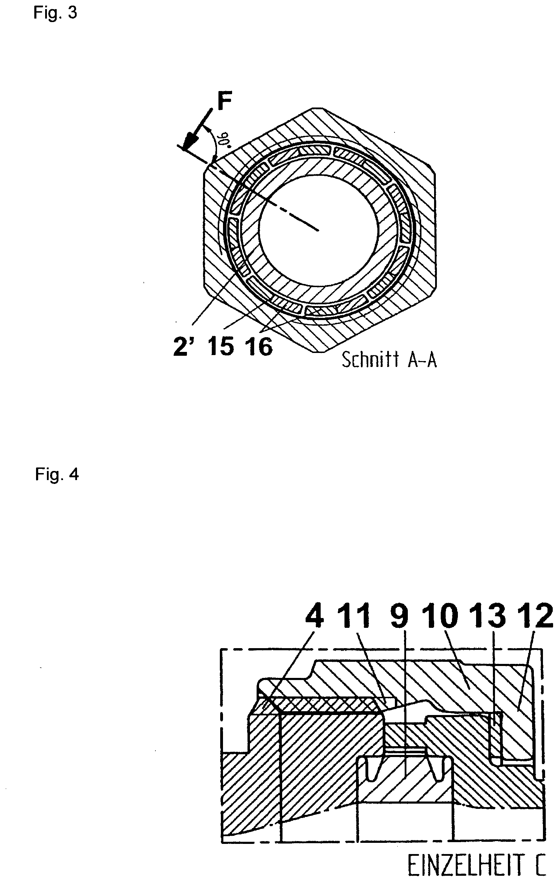

Weiterhin ist noch eine Mutter 10 mit einem Innengewinde 11 sowie am einen Ende mit einem radial nach innen gerichteten, zu der Druckfläche 6 des Druckflansches 5 korrespondierenden Innenring 12 vorgesehen. Diese Mutter 10 wird mit ihrem Innengewinde 11 auf das Außengewinde 4 des Schraubflansches 3 aufgedreht. Dabei kommt der Innenring 12 der Mutter 10 unter Zwischenanordnung einer Unterlegscheibe 13 (siehe **Fig. 4**) an der Druckfläche 6 des Druckflansches 5 zur Anlage. Außerdem werden die Stirnseiten des Schraubflansches 3 sowie des Druckflansches 5 über einen Anschlag 14 aneinander gepresst, der auch dafür sorgt, dass der Dichtring 9 nicht stärker verformt wird als zur Erreichung der Dichtwirkung nötig; über die Länge des Anschlags 14 wird also praktisch die zur Verformung des Dichtrings 9 zur Verfügung stehende Länge definiert.

Schließlich ist noch zwischen dem Schraubflansch 3 und dem Druckflansch 5 eine Verdrehsperre 15 ausgebildet, wie sie insbesondere in **Fig. 3** zu erkennen ist. Diese Verdrehsperre 15 besteht aus Klauen 16, die sich sowohl beim Schraubflansch 3 als auch beim Druckflansch 5 gleichmäßig um den Umfang herum erstrecken und in Axialrichtung der Rohrstutzenabschnitte 1', 2' vorragen. Im zusammengefügten Zustand greifen dabei die Klauen 16 korrespondierend ineinander. Dabei ist ein geringes Drehspiel vorgesehen. Im durch die Mutter 10 angezogenen Zustand liegen die seitlichen Flanken der Klauen 16 flächig aneinander.

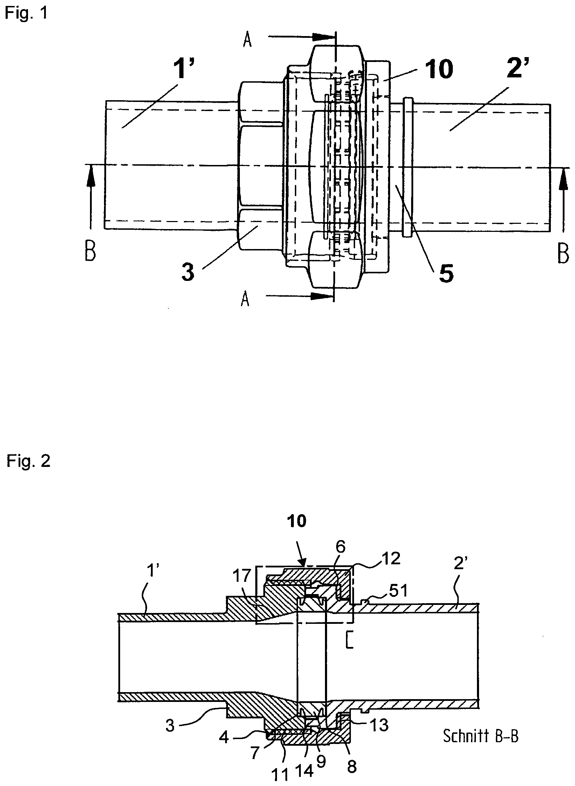

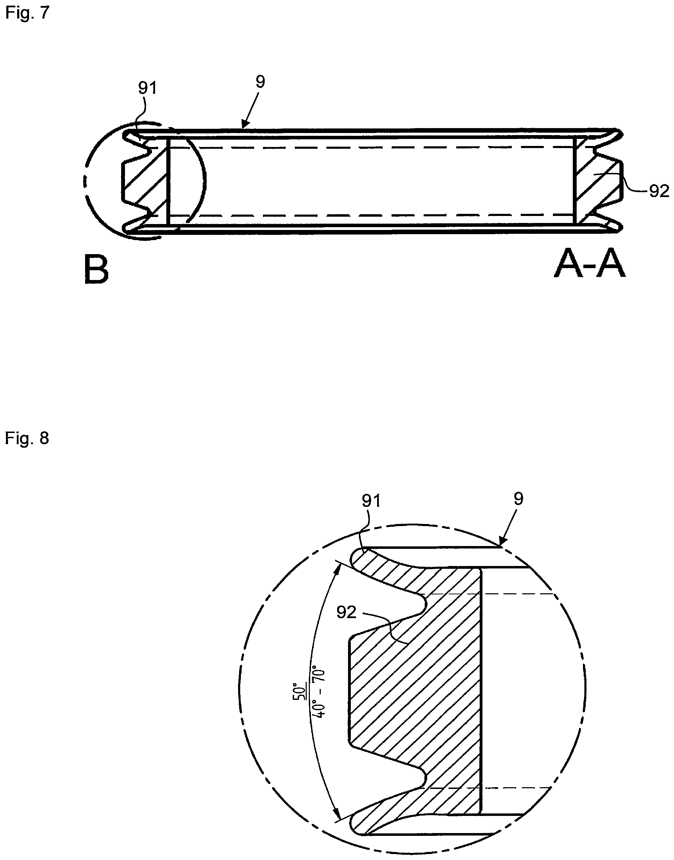

Der Dichtring 9, wie er in **Fig. 5** im Ausgangszustand und in **Fig. 2** im verpressten Zustand dargestellt ist, zeichnet sich durch zwei ringförmige, V-förmig abgespreizte Schenkel 91 (siehe **Fig. 7**) aus. Beim Verpressen des Dichtringes 9 kommen die abgerundeten vorderen Enden der Schenkel in dem 90°-Winkel der Ausnehmungen 7, 8 dichtend zur Anlage.

Die Besonderheit der vorbeschriebenen modularen Spannverschraubung für Rohrleitungen 1, 2 ist Folgende: In **Fig. 2** sind die fix vorgegebenen, konstanten Durchmesserbereiche mit durchgezogenen Linien dargestellt, während der Adaptionsbereich für variable Rohranschlüsse mit strichpunktierten Linien dargestellt ist.

Im Ausführungsbeispiel gemäß **Fig. 4** wird dabei von einem Dichtring 9 ausgegangen, welcher einen Innendurchmesser von 16,6 mm und einen Außendurchmesser von 21,6 mm besitzt. Daran angepasst dimensioniert sind die Ausnehmungen 7, 8 des Schraubflansches 3 sowie des Druckflansches 5. Die vorbeschriebenen Elemente sind hinsichtlich ihrer Bemaßungen fix.

Was nicht fix ist und was sich ändern kann, sind die Innendurchmesser der Rohrleitungen bzw. der Rohrstutzenabschnitte 1',2', die den Durchmessern der Rohrleitungen entsprechen. Im dargestellten Ausführungsbeispiel beträgt bei dem Rohrstutzenabschnitt 1' der Innendurchmesser 13 mm und bei dem Rohrstutzenabschnitt 2' der Innendurchmesser 16 mm. Diese beiden Innendurchmesser sind somit geringer als der Innendurchmesser des Dichtringes 9 mit 16,6 mm.

Um eine Anpassung an diese unterschiedlichen Innendurchmesser der Rohrstutzenabschnitte 1', 2' zu realisieren, weisen sowohl der Schraubflansch 3 als auch der Druckflansch 5 im Übergangsbereich zwischen den unterschiedlichen Durchmessern jeweils einen Konusbereich 17 auf. Dieser kann als exakter geometrischer Konus ausgebildet sein, aber auch in einer etwas modifizierten, jedoch immer noch vom Grundverständnis her konusartigen Kontur.

Ausgehend von diesem fixen Flanschsystem mit den vorgegebenen Durchmessern ist es möglich, Rohrleitungen mit anderen Innendurchmessern anzuschließen. In diesem Fall ist es lediglich notwendig, den Konusbereich 17 zu modifizieren.

Schließlich ist ein besonderes Kennzeichen der modularen Systemverschraubung, dass unterschiedliche Dichtringe 9 mit unterschiedlichen Innen- und Außendurchmessern vorgesehen sein können, um dadurch eine weite Bandbreite von Rohrleitungen mit unterschiedlichen Innendurchmessern abzudecken. Für diesen Fall sind selbstverständlich die Flanschbereiche des Schraubflansches 3 sowie des Druckflansches 5 mit ihren Ausnehmungen 7, 8 korrespondierend ausgebildet.

Mit den vorstehend diskutierten variablen Innendurchmessern der verschiedenen Rohrleitungen verändern sich selbstverständlich korrespondierend auch die Außendurchmesser der Rohrleitungen. So gilt das zuvor Gesagte auch für sich verändernde Außendurchmesser entsprechend.

In **Fig. 6** ist schließlich dargestellt wie die Rohrleitungen 1,2 an die Rohrstutzenabschnitte 1', 2' angebunden, resp. angeschweißt sind, wobei die Vorrichtung zur Verbindung der beiden Rohre 1,2 der schon in **Fig. 2** gezeigten Vorrichtung entspricht und die Rohrleitungen 1,2 unterschiedliche Durchmesser haben.

**Fig. 7** zeigt den eingesetzten Dichtring im Längsschnitt, wobei hier die beiden Schenkel 91, die V-förmig abstehen, gut zu erkennen sind. Zwischen den Schenkeln 91 ist ein "Ringbereich" 92 vorgesehen, der die Steifigkeit des Dichtrings 9 bereitstellt und damit eine gleichmäßige Kraftverteilung der Schenkel 91 auf die "Dichtlinien" ermöglicht. Beim Verschrauben der Vorrichtung zum Verbinden zweier Rohrleitungen werden die Schenkel 91 plastisch verformt, wodurch der Dichtring 9 an den äußeren Mantelflächen der Ausnehmungen 7,8 der jeweiligen Flansche angepresst wird und eine optimal gasdichte und diffusionsfreie Verbindung erreicht wird, die geringste Wasserstoff- und Heliumleckraten aufweist.

In der **Fig. 8** ist das in **Fig. 7** eingezeichnete Detail B gezeigt, wobei zu erkennen ist, dass der Winkel den die beiden Schenkel 91 einschließen, in einem Bereich von 40° bis 70° liegt, bevorzugt bei etwa 50°.

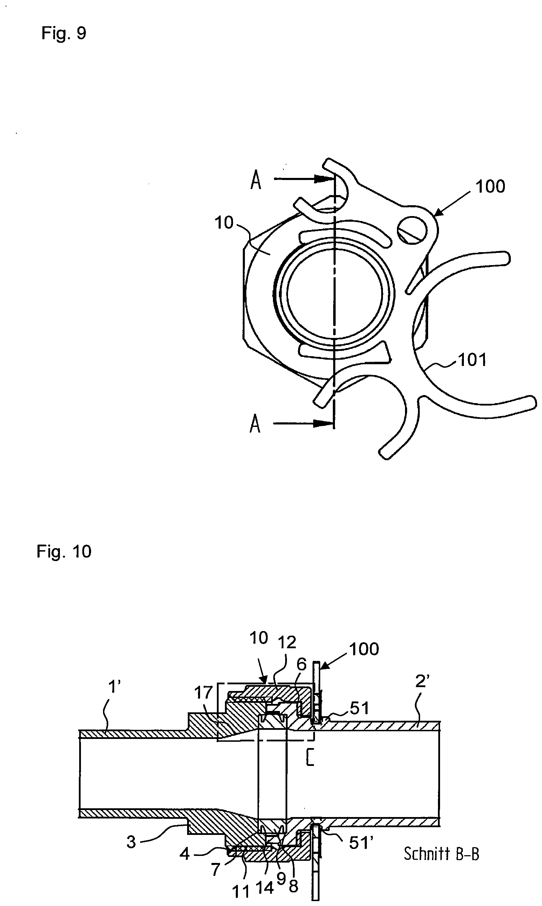

In den **Fig. 9** und **Fig. 10** ist schließlich die erfindungsgemäße Anordnung zum Lösen der Rohrverbindung gezeigt, die neben der Vorrichtung selbst noch ein Entformungswerkzeug 100 aufweist.

Das Entformungswerkzeug 100 ist dazu vorgesehen, die Vorrichtung zum Verbinden der Rohrleitungen mit wenig apparativem Aufwand zu lösen, was ohne Hilfsmittel aufgrund der plastischen Verformung des Dichtrings beim Anziehen der Verschraubung schwierig werden kann, da der Dichtring durch die plastische Verformung an den Mantelflächen der Ausnehmungen 7,8 kraftschlüssig gehalten wird.

Am Druckflansch 5 ist ein umlaufender Einstich bzw. ein Bund 51 vorgesehen (je nach Sichtweise), auf den das Entformungswerkzeug 100 mit seinem Eingriffsabschnitt 101 gesteckt werden kann. Zum Lösen der Verschraubung wird nun die Mutter 10 gelockert, sodass sie sich ein Stück weit in Richtung des Bundes 51 bewegt (in der Figur nach rechts), bis sie an dem Entformungswerkzeug 100 anliegt; davon ausgehend wird die Mutter 10 weiter geöffnet, wodurch eine Axialkraft auf das Entformungswerkzeug 100 ausgeübt wird, das diese Axialkraft wiederum über die zu der Mutter 10 weisenden Flanke 51' des Bundes 51 an den Druckflansch 5 überträgt. Bei einer weiteren Bewegung der Mutter 10 wird nun der Druckflansch 5 mitgenommen, wodurch der Aufnahmebereich des Druckflansches 5 von dem Dichtring 9 getrennt wird. Dies kann nötig werden, weil der Dichtring 9 nach seiner plastischen Verformung beim Verschrauben in dem Aufnahmeabschnitt fest sitzt. Zusammen mit dem Entformungswerkzeug 100 bildet die erfindungsgemäße Vorrichtung daher ihren eigenen Abzieher, der die Demontage der Vorrichtung selbst in engen unzugänglichen Einbausituationen ermöglicht.

Das Entformungswerkzeug 100 hat vier U-förmige Eingriffsabschnitte 101 mit unterschiedlichen Innendurchmessern. Durch diese Bauweise kann das Werkzeug 100 für Flansche mit verschiedenen Außendurchmessern eingesetzt werden; bevorzugt sind die Durchmesser der Eingriffsabschnitte 101 so gewählt, dass deren Radien mit den Außendurchmessern der Druckflansche des hierin beschrieben Verschraubungssystems korrespondieren. Aufgrund der platzsparenden Anordnung der Eingriffsabschnitte 101 zueinander kann mit dem Entformungswerkzeug dennoch in engen Platzverhältnissen gearbeitet werden.

### BEZUGSZEICHENLISTE

- 1: Rohrleitung
- 2: Rohrleitung
- 1': Rohrstutzenabschnitt
- 2': Rohrstutzenabschnitt
- 3: Schraubflansch
- 4: Außengewinde
- 5: Druckflansch
- 51: Einstich / Bund
- 6: Druckfläche
- 7: Ausnehmung
- 8: Ausnehmung
- 9: Dichtring
- 91: Schenkel
- 92: mittig angeordneter Ring
- 10: Mutter
- 11: Innengewinde
- 12: Innenring
- 13: Unterlegscheibe
- 14: Anschlag
- 15: Verdrehsperre
- 16: Klaue
- 17: Konusbereich
- 100: Entformungswerkzeug
- 101: Eingriffsabschnitt

## Patentansprüche

1. Vorrichtung zum koaxialen Verbinden zweier Rohrleitungen (1,2) mit unterschiedlichen Innendurchmessern,
- mit einem Schraubflansch (3) für die eine Rohrleitung (1), der ein Außengewinde (4) aufweist, und
- mit einem Druckflansch (5) für die andere Rohrleitung (2), der eine Druckfläche (6) für eine Mutter (10) aufweist, und
- mit einem Dichtring (9), der zwischen den gegenüberliegenden Stirnseiten des Schraubflansches (3) einerseits und des Druckflansches (5) andererseits in Ausnehmungen (7, 8) angeordnet ist, sowie
mit einer Mutter (10), die ein Innengewinde (11) aufweist und die auf den Druckflansch (5) aufgeschoben ist und auf den Schraubflansch (3) aufdrehbar ist, wobei
- der Innendurchmesser des Dichtringes (9) größer oder zumindest gleich groß ist wie der Innendurchmesser der Rohrleitungen (1,2), wobei der Unterschied der Innendurchmesser der Rohrleitungen (1,2) jeweils über einen Konusbereich (17) des Druckflansches (5) und einen Konusbereich (17) des Schraubflansches (3) ausgeglichen wird,
und
- der Dichtring (9) um seinen gesamten äußeren Umfang herum parallel zu dessen oberer und unterer Flachseite radial nach außen weisende, gespreizte Schenkel (91) in Form eines V-Profils aufweist,
**dadurch gekennzeichnet, dass.** die Druckfläche (6) des Druckflansches (5) für die Mutter (10) einen in axialer Aufdrehrichtung der Mutter (10) gesehen stumpfen Winkel hat und/oder ballig ausgebildet ist.

2. Vorrichtung nach Anspruch 1,
**dadurch gekennzeichnet, dass**
- der Druckflansch (5) und/oder der Schraubflansch (3) einen Rohrstutzenabschnitt (1',2') aufweist/aufweisen, der/die dazu ausgebildet ist/sind, mit der/den Rohrleitung(en) (1,1) verbunden zu werden, wobei bevorzugt
- der/die Rohrstutzenabschnitt(e) (1',2') den gleichen Querschnitt wie die mit ihnen zu verbindenden Rohre (1,2) haben und/oder
- sich der ausgleichende Konusbereich (17) zwischen der zur Aufnahme des Dichtrings (9) ausgebildeten Ausnehmung (7,8) und einem zu dem Rohrstutzenabschnitt (1',2') weisenden Ende des Druckflanschs (5) und des Schraubflanschs (3) erstreckt.

3. Vorrichtung nach Anspruch 1 oder 2,
**dadurch gekennzeichnet, dass**
- der Innendurchmesser des Dichtringes (9) gleich groß ist wie der Innendurchmesser eines der Flansche, Druckflansch (5) oder Schraubflansch (3), wobei
- eine 90°-Ecke zwischen dem Innenquerschnitt des Rohrstutzenabschnitts (1',2') des Druckflanschs (5) oder des Schraubflanschs (3) und der Ausnehmung (7, 8) zur Aufnahme des Dichtrings (9) eine Kantenverrundung aufweist.

4. Vorrichtung nach zumindest einem der vorhergehenden Ansprüche,
**dadurch gekennzeichnet, dass**
- der Dichtring (9) und die Flansche (3, 5) aus dem gleichen oder einem zumindest sehr ähnlichen Material bestehen und
- die dichtenden Enden der Schenkel (91) des V-Profils sowohl vor als auch nach dem Zusammenpressen der beiden Flansche (3, 5) einen kreisförmigen oder kreisähnlichen Querschnitt aufweisen und
- in der Dichtstellung des Dichtungssystems nach dem Zusammenpressen die dichtenden Enden der Schenkel (91) des Dichtringes (9) sowohl über eine erste Kreislinie definierenden Berührungspunkte an einer ersten Dichtfläche als auch über eine zweite Kreislinie definierenden Berührungspunkte an einer zweiten Dichtfläche dichtend anliegen,
- wobei die beiden Kreislinien dabei getrennt voneinander sind,
- wobei die Ausnehmungen (7, 8) jeweils senkrecht zur Rohrachse die erste, durch den Boden der Ausnehmung (7, 8) gebildete Dichtfläche sowie senkrecht zur Flanschebene die zweite, durch die Innenwand der Ausnehmung (7, 8) gebildete Dichtfläche definieren.

5. Vorrichtung nach Anspruch 4,
**dadurch gekennzeichnet, dass**
der Winkel des V-Profils
- 70° bis 100°, bevorzugt 90°, beträgt oder
- 40° bis 70°, bevorzugt 50°, beträgt.

6. Vorrichtung nach Anspruch 4 oder 5,
**dadurch gekennzeichnet, dass**
der Dichtring (9) zwischen den beiden Schenkeln zusätzlich einen mittig angeordneten Ring (92) aufweist;
wobei bevorzugt
der Dichtring (9) und die Flansche (3, 5) aus normalem Stahl oder Edelstahl bestehen.

7. Vorrichtung nach zumindest einem der vorhergehenden Ansprüche,
**dadurch gekennzeichnet, dass**
zwischen dem Schraubflansch (3) und dem Druckflansch (5) eine Verdrehsperre (15) vorgesehen ist,
wobei bevorzugt die Verdrehsperre (15) durch in Axialrichtung der Rohrstutzenabschnitte (1', 2') vorstehende Klauen (16) gebildet ist, welche sich sowohl beim Schraubflansch (3) als auch beim Druckflansch (5) gleichmäßig um den Umfang herum erstrecken und welche im zusammengefügten Zustand korrespondierend ineinandergreifen, und wobei besonders bevorzugt die Klauen (16) des Schraubflansches (3) und die Klauen (16) des Druckflansches (5) in der Verdrehstellung flächig aneinanderliegen.

8. Vorrichtung nach zumindest einem der vorhergehenden Ansprüche,
**dadurch gekennzeichnet, dass**
der Durchmesser zumindest einer der Ausnehmungen (7, 8) des Druckflansches (5) und/oder des Schraubflansches (3) bezüglich eines Außendurchmessers des Dichtrings (9) so gewählt ist, dass sich eine Presspassung zwischen Dichtring und Ausnehmung (7,8) ergibt, wobei die Pressung bevorzugt 0,005 mm bis 0,01 mm beträgt.

9. Vorrichtung nach zumindest einem der vorhergehenden Ansprüche,
**dadurch gekennzeichnet, dass**
der Druckflansch (5) in einem vorbestimmten Abstand von der Druckfläche (6) einen umlaufenden Einstich oder Bund (51) aufweist, der bevorzugt eine radiale Ausdehnung in einem Bereich von 0,2 mm bis 4,0 mm, besonders bevorzugt in einem Bereich von 0,5 mm bis 1,5 mm, hat,
wobei bevorzugt
eine zu der Mutter (10) weisende Flanke (51') des Einstichs oder des Bundes (51) in einem Abstand von 1,0 bis 3,0 mm, bevorzugt 1,5 mm bis 2,5 mm, von der Druckfläche (6) des Druckflansches (5) entfernt vorliegt.

10. Vorrichtung nach zumindest einem der vorhergehenden Ansprüche,
**dadurch gekennzeichnet, dass**
für unterschiedliche Rohrinnendurchmesser ein modulares Verschraubungssystem mit mehreren Dichtringen (9) mit unterschiedlichen Innendurchmessern sowie daran angepasste Schraubflansche (3) sowie Druckflansche (5) vorgesehen ist.

11. Anordnung zum Lösen einer Vorrichtung zum koaxialen Verbinden zweier Rohrleitungen (1,2) mit unterschiedlichen Innendurchmessern,
- mit einer Vorrichtung nach einem der Ansprüche 1 bis 8, wobei der Druckflansch (5) in einem vorbestimmten Abstand von der Druckfläche (6) einen umlaufenden Einstich oder Bund (51) aufweist, der eine radiale Ausdehnung in einem Bereich von 0,2 mm bis 4,0 mm hat,
und
- mit einem Entformungswerkzeug (100), das einen flachen Eingriffsabschnitt (101) aufweist, dessen Dicke kleiner ist als die Breite des Einstichs oder einen Abstand der zu der Mutter (10) weisenden Flanke des Bundes (51) und der Druckfläche (6) des Druckflansches (5).

12. Anordnung nach Anspruch 11, wobei
die radiale Ausdehnung in einem Bereich von 0,5 mm bis 1,5 mm liegt, und wobei bevorzugt
eine zu der Mutter (10) weisende Flanke (51') des Einstichs oder des Bundes (51) in einem Abstand von 1,0 bis 3,0 mm, bevorzugt 1,5 mm bis 2,5 mm, von der Druckfläche (6) des Druckflansches (5) entfernt vorliegt.

13. Anordnung nach Anspruch 11 oder 12,
**dadurch gekennzeichnet, dass**
der Eingriffsabschnitt (101) des Entformungswerkzeugs (100) eine U-förmige Öffnung aufweist, die passend auf den zwischen der Mutter (10) und dem Bund (51) liegenden Abschnitt des Druckflansches (5) oder auf den Einstich steckbar ist.

## Claims

1. Device for coaxially connecting two pipelines (1,2) with different inner diameters,
- with a screw flange (3) for the one pipeline (1), which screw flange has an outer thread (4), and
- with a pressure flange (5) for the other pipeline (2), which pressure flange has a pressure surface (6) for a nut (10), and
- with a sealing ring (9) which is arranged in recesses (7, 8) between the opposite end faces of the screw flange (3) on one side and of the pressure flange (5) on the other side, and also
with a nut (10) which has an inner thread (11) and which is pushed onto the pressure flange (5) and is screwable onto the screw flange (3), wherein
- the inner diameter of the sealing ring (9) is greater than or at least equal to the inner diameter of the pipelines (1,2), wherein the difference of the inner diameters of the pipelines (1,2) is compensated respectively by a cone region (17) of the pressure flange (5) and a cone region (17) of the screw flange (3),
and
- the sealing ring (9) has limbs (91) running around its whole outer circumference parallel to its upper and lower flat side, which limbs point radially outwards and are spread in the form of a V-profile,
**characterised in that** the pressure surface (6) of the pressure flange (5) has for the nut (10) an obtuse angle, seen in the axial screwing-on direction of the nut (10), and/or is of crowned form.

2. Device according to claim 1,
**characterised in that**
- the pressure flange (5) and/or the screw flange (3) has/have a pipe socket portion (1',2') which is/are formed to be connected to the pipeline(s) (1,1), wherein preferably
- the pipe socket portion(s) (1',2') have the same cross-section as the pipes (1,2) to be connected to them and/or
- the compensating cone region (17) extends between the recess (7,8), formed for receiving the sealing ring (9), and an end of the pressure flange (5), pointing towards the pipe socket portion (1',2'), and the screw flange (3).

3. Device according to claim 1 or 2,
**characterised in that**
- the inner diameter of the sealing ring (9) is the same size as the inner diameter of one of the flanges, pressure flange (5) or screw flange (3),
wherein
- a 90° corner between the inner cross-section of the pipe socket portion (1',2') of the pressure flange (5) or the screw flange (3) and the recess (7, 8) for receiving the sealing ring (9) has an edge rounding.

4. Device according to at least one of the preceding claims,
**characterised in that**
- the sealing ring (9) and the flanges (3, 5) are composed of the same or an at least very similar material and
- the sealing ends of the limbs (91) of the V-profile have a circular or circular-like cross-section both before and after the pressing together of the two flanges (3, 5) and
- in the sealing position of the sealing system after the pressing together, via contact points defining a first circular line the sealing ends of the limbs (91) of the sealing ring (9) lie sealingly against a first sealing surface and via contact points defining a second circular line the sealing ends of the limbs (91) of the sealing ring (9) lie sealingly against a second sealing surface,
- wherein the two circular lines are separated from each other in so doing,
- wherein the recesses (7, 8) define respectively perpendicular to the pipe axis the first sealing surface formed by the bottom of the recess (7, 8) and perpendicular to the flange plane the second sealing surface formed by the inner wall of the recess (7, 8).

5. Device according to claim 4,
**characterised in that**
the angle of the V-profile is
- 70° to 100°, preferably 90°, or
- 40° to 70°, preferably 50°.

6. Device according to claim 4 or 5,
**characterised in that**
the sealing ring (9) has additionally a centrally arranged ring (92) between the two limbs;
wherein preferably
the sealing ring (9) and the flanges (3, 5) are composed of normal steel or special steel.

7. Device according to at least one of the preceding claims,
**characterised in that**
an anti-rotation lock (15) is provided between the screw flange (3) and the pressure flange (5),
wherein preferably the anti-rotation lock (15) is formed by claws (16) protruding in the axial direction of the pipe socket portions (1',2'), which claws extend evenly around the circumference both in the case of the screw flange (3) and in the case of the pressure flange (5) and which in the assembled state engage in one another correspondingly, and wherein particularly preferably the claws (16) of the screw flange (3) and the claws (16) of the pressure flange (5) lie flat against one another in the rotated position.

8. Device according to at least one of the preceding claims,
**characterised in that**
the diameter of at least one of the recesses (7,8) of the pressure flange (5) and/or of the screw flange (3) is selected with respect to an outer diameter of the sealing ring (9) so that an interference fit between the sealing ring and the recess (7,8) results, wherein the interference is preferably 0.005 mm to 0.01 mm.

9. Device according to at least one of the preceding claims,
**characterised in that**
the pressure flange (5) has, at a predetermined distance from the pressure surface (6), a circumferential groove or collar (51), which preferably has a radial extent in a range from 0.2 mm to 4.0 mm, particularly preferably in a range from 0.5 mm to 1.5 mm,
wherein preferably
a flank (51') of the groove or of the collar (51), which flank points towards the nut (10), is present at a distance of 1.0 to 3.0 mm, preferably 1.5 mm to 2.5 mm, from the pressure surface (6) of the pressure flange (5).

10. Device according to at least one of the preceding claims,
**characterised in that**
for different pipe inner diameters a modular screwing system with a plurality of sealing rings (9) with different inner diameters and, adapted thereto, screw flanges (3) and pressure flanges (5) is provided.

11. Arrangement for releasing a device for coaxially connecting two pipelines (1,2) with different inner diameters,
- with a device according to one of claims 1 to 8, wherein the pressure flange (5) has, at a predetermined distance from the pressure surface (6), a circumferential groove or collar (51) which has a radial extent in a range from 0.2 mm to 4.0 mm,
and
- with a demoulding tool (100) which has a flat engagement portion (101) whose thickness is smaller than the width of the groove or a distance of the flank of the collar (51) and of the pressure surface (6) of the pressure flange (5), which flank points towards the nut (10).

12. Arrangement according to claim 11, wherein
the radial extent lies in a range from 0.5 mm to 1.5 mm, and wherein preferably
a flank (51') of the groove or of the collar (51), which flank points towards the nut (10), is present at a distance of 1.0 to 3.0 mm, preferably 1.5 mm to 2.5 mm, from the pressure surface (6) of the pressure flange (5).

13. Arrangement according to claim 11 or 12,
**characterised in that**
the engagement portion (101) of the demoulding tool (100) has a U-shaped opening which is pluggable in a matching manner onto the portion of the pressure flange (5) or onto the groove, which portion or groove lies between the nut (10) and the collar (51).

## Revendications

1. Dispositif pour assembler de manière coaxiale deux conduites tubulaires (1, 2) de diamètres intérieurs différents,
- avec une bride filetée (3) pour l'une conduite tubulaire (1) présentant un filet extérieur (4), et
- avec une bride de pression (5) pour l'autre conduite tubulaire (2) présentant une surface de pression (6) pour un écrou (10), et
- avec une bague d'étanchéité (9) qui est disposée entre les faces frontales opposées de la bride filetée (3), d'une part, et de la bride de pression (5), d'autre part, dans des évidements (7, 8), ainsi qu'avec un écrou (10) qui présente un filet intérieur (11) et qui est enfiché sur la bride de pression (5) et qui peut être vissé sur la bride filetée (3),
dans lequel
- le diamètre intérieur de la bague d'étanchéité (9) est supérieur ou au moins égal au diamètre intérieur des conduites tubulaires (1, 2), la différence entre les diamètres intérieurs des conduites tubulaires (1, 2) étant chaque fois compensée par une zone conique (17) de la bride de pression (5) et une zone conique (17) de la bride filetée (3),
et
- la bague d'étanchéité (9) présente autour de toute sa circonférence extérieure, de manière parallèle à sa face plane supérieure et inférieure, des branches (81) écartées orientées radialement vers l'extérieur en forme de profilé en "V", **caractérisé par le fait que** la surface de pression (6) de la bride de pression (5) pour l'écrou (10) présente, vu dans une direction de vissage axiale de l'écrou (10), un angle obtus et/ou est réalisée bombée.

2. Dispositif selon la revendication 1,
**caractérisé par le fait que**
- la bride de pression (5) et/ou la bride filetée (3) présente(nt) un segment de tubulure (1', 2') qui est réalisé pour être connecté à la ou aux conduites tubulaires (1, 1), où de préférence
- le ou les segments de tubulure (1', 2') ont la même section que les tubes (1, 2) à connecter avec eux, et/ou
la zone conique de compensation (17) s'étend entre l'évidement (7,8) réalisé pour recevoir la bague d'étanchéité (9) et une extrémité de la bride de pression (5) orientée vers le segment de tubulure (1', 2') et de la bride filetée (3).

3. Dispositif selon la revendication 1 ou 2,
**caractérisé par le fait que**
- le diamètre intérieur de la bague d'étanchéité (9) est égal au diamètre intérieur de l'une des brides, de la bride de pression (5) ou de la bride filetée (3), où
- un angle de 90° entre la section intérieure du segment de tubulure (1', 2') de la bride de pression (5) ou de la bride filetée (3) et l'évidement (7, 8) destiné à recevoir la bague d'étanchéité (9) présente un arrondi de bord.

4. Dispositif selon au moins l'une des revendications précédentes,
**caractérisé par le fait que**
- la bague d'étanchéité (9) et les brides (3, 5) sont réalisées en un même matériau ou en un matériau au moins très similaire, et
- les extrémités étanches des branches (91) du profilé en "V" présentent, tant avant qu'après la compression des deux brides (3, 5), une section circulaire ou d'aspect circulaire, et
- en position d'étanchéité du système d'étanchéité après compression, les extrémités étanches des branches (91) de la bague d'étanchéité (9) s'appuient de manière étanche tant par l'intermédiaire de points de contact définissant une première ligne circulaire sur une première surface d'étanchéité que par l'intermédiaire de points de contact définissant une deuxième ligne circulaire sur une deuxième surface d'étanchéité,
- les deux lignes circulaires étant séparées l'une de l'autre,
- les évidements (7, 8) définissant, chacun, le premier, de manière perpendiculaire à l'axe de tube, la surface d'étanchéité formée par le fond de l'évidement (7, 8) ainsi que le deuxième, de manière perpendiculaire au plan de bride, la surface d'étanchéité formée par la paroi intérieure de l'évidement (7, 8).

5. Dispositif selon la revendication 4,
**caractérisé par le fait que**
l'angle du profilé en "V"
- est de 70° à 100°, de préférence de 90°, ou
- est de 40° à 70°, de préférence de 50°.

6. Dispositif selon la revendication 4 ou 5,
**caractérisé par le fait que**
la bague d'étanchéité (9) présente, entre les deux branches, par ailleurs une bague (92) disposée de manière centrale;
où de préférence
la bague d'étanchéité (9) et les brides (3, 5) sont réalisées en acier normal ou en acier inoxydable.

7. Dispositif selon au moins l'une des revendications précédentes,
**caractérisé par le fait que**
entre la bride filetée (3) et la bride de pression (5) est prévu un moyen de verrouillage en rotation (15),
où de préférence le moyen de verrouillage en rotation (15) est constitué par des griffes faisant saillie (16) dans la direction axiale des segments de tubulure (1', 2') qui s'étendent, tant dans le cas de la bride filetée (3) que dans le cas de la bride de pression (5), de manière uniforme autour de la circonférence et qui, à l'état assemblé, s'engagent de manière correspondante l'une dans l'autre, et les griffes (16) de la bride filetée (3) et les griffes (16) de la bride de pression (5) sont, en position de verrouillage en rotation, particulièrement de préférence adjacentes à plat l'une à l'autre.

8. Dispositif selon au moins l'une des revendications précédentes,
**caractérisé par le fait que**
le diamètre d'au moins l'un des évidements (7, 8) de la bride de pression (5) et/ ou de la bride filetée (3) est choisi, par rapport à un diamètre extérieur de la bague d'étanchéité (9), de sorte qu'il se produise un ajustement serré entre la bague d'étanchéité et l'évidement (7, 8), la pression étant de préférence de 0,005 mm à 0,01 mm.

9. Dispositif selon au moins l'une des revendications précédentes,
**caractérisé par le fait que**
la bride de pression (5) présente, à une distance prédéterminée de la surface de pression (6), une encoche ou un épaulement circonférentiel (51) qui présente, de préférence, une extension radiale dans une plage de 0,2 mm à 40 mm, particulièrement de préférence dans une plage de 0,5 mm à 1,5 mm,
où de préférence
un flanc de l'encoche ou de l'épaulement (51) orienté vers l'écrou (10) est présent à une distance de 1,0 à 3,0 mm, de préférence de 1,5 mm à 2,5 mm, de la surface de pression (6) de la bride de pression (5).

10. Dispositif selon au moins l'une des revendications précédentes,
**caractérisé par le fait que**
pour différents diamètres intérieurs de tube sont prévus un système de vissage modulaire avec plusieurs bagues d'étanchéité (9) de diamètres intérieurs différents ainsi que des brides filetées (3) ainsi que des brides de pression (5) y adaptées.

11. Aménagement de détachement d'un dispositif pour assembler de manière coaxiale deux conduites tubulaires (1, 2) de diamètres intérieurs différents,
- avec un dispositif selon l'une des revendications 1 à 8, où la bride de pression (5) présente, à une distance prédéterminée de la surface de pression (6), une encoche ou un épaulement circonférentiel (51) présentant une extension radiale dans une plage de 0,2 mm à 4,0 mm,
et
- avec un outil de démoulage (100) qui présente un segment d'engagement plat (101) dont l'épaisseur est inférieure à la largeur de l'encoche ou à une distance entre le flanc de l'épaulement (51) orienté vers l'écrou (10) et la surface de pression (6) de la bride de pression (5).

12. Aménagement selon la revendication 11, dans lequel l'extension radiale se situe dans une plage de 0,5 et 1,5 mm, et
où de préférence
un flanc (51') de l'encoche ou de l'épaulement (51) orienté vers l'écrou (10) est présent à une distance de 1,0 à 30 mm, de préférence de 1,5 mm à 2,5 mm, de la surface de pression (6) de la bride de pression (5).

13. Aménagement selon la revendication 11 ou 12,
**caractérisé par le fait que**
le segment d'engagement (101) de l'outil de démoulage (100) présente une ouverture en "U" qui peut être enfichée en liaison sur le segment de la bride de pression (5) situé entre l'écrou (10) et l'épaulement (51) ou sur l'encoche.
